# EUROPÄISCHE PATENTANMELDUNG

(11) **EP 2 453 324 A1**
(43) Veröffentlichungstag der Anmeldung: **16.05.2012**
(21) Anmeldenummer: 10191146.9
(22) Anmeldetag: 15.11.2010
(51) Int. Cl.: G05B 19/042

(54) **Automatisierungsgerät mit Diagnosespeicher und Verfahren dazu**

(71) Anmelder: SIEMENS AKTIENGESELLSCHAFT, 80333 München (DE)
(72) Erfinder: Fuchs, Heiner, 91056, Erlangen (DE); Trapp, Lothar, 90537, Feucht (DE)

(57) **Zusammenfassung**

Automatisierungsgerät mit Diagnosespeicher und Verfahren dazu

Die Erfindung betrifft ein Verfahren zum Betrieb eines Diagnosespeichers (2) in einem Automatisierungsgerät (1), wobei über ein Diagnoseprogramm (3) eine Meldung (n) von Hard-und/oder Softwarekomponenten eines Automatisierungssystems (10) erfasst wird, und in den Diagnosespeicher (2) eingetragen wird, wobei
- durch das Diagnoseprogramm (3) geprüft wird, ob diese Meldung (n) bereits im Diagnosespeicher (2) existiert und
- falls dies zutrifft ein Zähler(kₙ) für diese Meldung (n) bis zu einem vorgebbaren Grenzwert (g) hoch gezählt wird, und
- bei Erreichen des Grenzwertes (g) ein sich auf diese Meldung (n) beziehender Überlaufmerker (oₙ) generiert wird, wodurch ein überlauf des Diagnosespeichers (2) vermieden wird.

## Beschreibung

Die Erfindung betrifft ein Verfahren zum Betrieb eines Diagnosespeichers in einem Automatisierungsgerät, wobei durch ein Diagnoseprogramm eine Meldung von Hard- und/oder Softwarekomponenten eines Automatisierungssystems erfasst wird, und in den Diagnosespeicher eingetragen wird.

Des Weiteren umfasst die Erfindung ein Automatisierungsgerät, umfassend einen Diagnosespeicher, ein Diagnoseprogramm, wobei das Diagnoseprogramm ausgestaltet ist eine Meldung von Hard-und/oder Softwarekomponenten eines Automatisierungssystems zu erfassen und in den Diagnosespeicher einzutragen.

Aus der EP 2 104 012 A1 ist ein Automatisierungsgerät mit einer Diagnosefunktionalität bekannt. Derartige Automatisierungsgeräte werden beispielsweise zur Automatisierung eines komplexen Fertigungsprozesses eingesetzt, um beispielsweise die Qualität oder die Produktivität des Fertigungsprozesses zu erhöhen, aber auch um die Kosten zu senken oder die Gefährdung des Bedienpersonals zu reduzieren.

Da es sich bei Automatisierungsgeräten beispielsweise bei speicherprogrammierbaren Steuerungen, um prozessorgestützte Geräte handelt, zeigen derartige Geräte zeitweise ein bekanntes, leider aber auch unerwünschtes Verhalten von Computersystemen, bei denen Softwarekonflikte oder Hardwarekonflikte auftreten können.

Derartige Fehler können bis hin zum kompletten Absturz des Automatisierungsgerätes führen, wodurch dann der komplette automatisierte Prozess unterbrochen ist.

Die Ursachen für derartige Abstürze können in der Hardware, aber auch an der Software liegen, oder auch durch ein Zusammenwirken beider verursacht sein. Um die Ursache für derartige Fehler zu finden, benötigt man oft eine Diagnosesoftware, welche die verschiedenen aufgetretenen Betriebszustände und Daten der Hard- und/oder Softwarekomponenten des Automatisierungsgerätes bzw. im Verbund betrachtet des Automatisierungssystems sammelt und in einen Diagnosespeicher einträgt.

Automatisierungsgeräte weisen in der Regel eine sogenannte Firmware, also gewissermaßen ein spezielles Betriebssystems für das Automatisierungsgerät auf. Die Diagnosesoftware kann dann beispielsweise als Teil dieser Firmware ausgebildet sein. Alternativ ist es auch denkbar, dass die Diagnosesoftware als ein eigenständiges, separates Softwaremodul, das über ein Speichermedium in das Automatisierungsgerät geladen werden muss, ausgestaltet ist.

Bei den bekannten Lösungen sind die Automatisierungsgeräte mit einem Diagnosepuffer versehen, ausgestaltet als ein Ringpuffer, wobei in diesem Ringpuffer wichtige Ereignisse des Automatisierungsgerätes bzw. des Automatisierungssystems protokolliert werden. Die Ereignisse können z.B. Kanalfehler, Modulausfälle, Verbindungsausfälle, Stationsausfälle etc. sein. Da der Diagnosespeicher als ein Ringpuffer, also als ein Rundumpuffer, ausgestaltet ist, ist er voll, wenn alle Speicherzellen einmal beschrieben wurden. Das bedeutet, dass nun neue eingehende Ereignisse die bereits eingetragenen alten Ereignisse überschreiben. Manche Hardwarekomponenten können die unangenehme Eigenschaft besitzen, sehr viele solcher Ereignisse gleicher Art z.B. aufgrund eines Wackelkontaktes zu generieren. Diese Ereignisse füllen den Diagnosespeicher in derart, dass eventuell wichtigere Ereignisse überschrieben werden. Damit sinkt die Qualität der Informationen im Diagnosespeicher und ein möglicher anderer Fehler oder eine Fehlerursache kann somit nicht mehr gefunden werden, weil der Eintrag der anderen Störung überschrieben wurde.

Es ist Aufgabe der Erfindung ein Verfahren und ein Automatisierungsgerät bereitzustellen, welches eine Diagnose in einem Automatisierungsgerät bzw. in einem Automatisierungssystem erleichtert.

Für das eingangs genannte Verfahren zum Betrieb eines Diagnosespeichers wird die Aufgabe dadurch gelöst, dass durch das Diagnoseprogramm geprüft wird, ob diese Meldung bereits im Diagnosespeicher existiert und falls dies zutrifft, ein Zähler für diese Meldung bis zu einem vorgebbaren Grenzwert hochgezählt wird und bei Erreichen des Grenzwertes ein sich auf diese Meldung beziehender Überlaufmerker generiert wird, wodurch ein Überlauf des Diagnosespeichers vermieden wird. Das Eintragen von Betriebs- und/oder Fehlerzuständen wird durch die Steuerung über den Überlaufmerker begrenzt, so wird eine Vermeidung von Mehrfacheinträgen in den Diagnosespeicher erreicht.

In einer vorteilhaften Ausgestaltung des Verfahrens wird die Meldung nur bis zum Erreichen des Grenzwertes wiederholt eingetragen und danach nur noch der Zähler für diese Meldung hochgezählt und einmalig eine sich auf diese Meldung beziehende Überlaufmeldung generiert und in den Diagnosespeicher eingetragen. Damit wird für ein Servicepersonal, welches in einem Fehlerfall den Diagnosespeicher ausliest, sofort sichtbar, dass eine Komponente in sehr kurzer Zeit immer wieder denselben Fehler bzw. dieselbe Meldung abgesetzt hat. Da über den Zähler mitgezählt wird, wie oft dieses geschehen ist, kann das Servicepersonal auch die Häufigkeit ermitteln.

In einer weiteren Ausgestaltung des Verfahrens kann der Überlaufmerker und der Zähler durch eins der folgenden Ereignisse zurückgesetzt werden: Eine Hardwarekomponente auf die sich die Überlaufmeldung und der Überlaufmerker beziehen wird in dem Automatisierungssystem entfernt oder zugesteckt, ein Stationsfehler einer Station des Automatisierungssystems ist aufgetreten oder wieder behoben worden, ein Fehler eines Ein-/Ausgabesystems des Automatisierungssystems ist aufgetreten oder wieder behoben worden, eine aktive Anfrage über eine Systemfunktion des Automatisierungsgerätes wurde abgesetzt, das Automatisierungsgerät geht von einem Run-Zustand in einen Stopp-Zustand über, ein Zeitzähler ist abgelaufen und während der abgelaufenen vorgebbaren Zeit des Zeitzählers ist keine durch das Diagnoseprogramm bereits erkannte Meldung eingetroffen bzw. eingetragen und somit überbrückt worden. Beim Entfernen oder Zustecken von Hardwarekomponenten, bei einer Stationswiederkehr, also eine Station, die sich nach einem Ausfall wieder am Feldbus anmeldet, bei einer Wiederanmeldung eines Ein-/Ausgabesystems, ist vorzugsweise der Bezug zur Hardwarekomponente, zur Station oder zu einer Komponente in der Station, z.B. eine meldende Komponente ist Bestandteil einer Station, welche über ein Ein-/Ausgabesystem angeschlossen ist, zu prüfen. Auf Grundlage der Prüfung kann die entsprechende Überlaufmeldung oder der Überlaufmerker zurückgesetzt werden.

Ebenso wird die eingangs genannte Aufgabe durch ein Automatisierungsgerät, umfassend einen Diagnosespeicher, ein Diagnoseprogramm, wobei das Diagnoseprogramm ausgestaltet ist, eine Meldung von Hard- und/oder Softwarekomponenten eines Automatisierungssystems zu erfassen und in den Diagnosespeicher einzutragen, wobei das Automatisierungsgerät einen Speicherchip aufträgt, indem eine Firmware implementiert ist, die das Diagnoseprogramm aufweist, und das Diagnoseprogramm dazu ausgestaltet ist weiterhin zu prüfen, ob diese Meldung bereits im Diagnosespeicher existiert und falls dies zutrifft ein Zähler für diese Meldung vorhanden ist, welcher bis zu einem vorgebbaren Grenzwert hochzählt und bei Erreichen des Grenzwertes einen sich auf diese Meldung beziehenden Überlaufmerker generiert, wodurch ein Überlauf des Diagnosespeichers vermeidbar ist.

Das Diagnoseprogramm ist dabei vorteilhafter Weise weiterhin dazu ausgestaltet, die Meldung nur bis zum Erreichen des Grenzwertes wiederholt einzutragen und danach nur noch den Zähler für diese Meldung hochzuzählen und einmalig eine sich auf diese Meldung beziehende Überlaufmeldung zu generieren und in den Diagnosespeicher einzutragen.

Vorteilhafter Weise weist das Automatisierungsgerät ein Rücksetzmittel auf, dabei ist das Rücksetzmittel dazu ausgestaltet bei Eintreffen eines der folgenden Ereignisse den Überlaufmerker und den Zähler zurückzusetzen: Eine Hardwarekomponente auf die sich die Überlaufmeldung und der Überlaufmerker beziehen, wird in dem Automatisierungssystem entfernt oder zugesteckt, ein Stationsfehler einer Station des Automatisierungssystems ist aufgetreten oder wieder behoben worden, ein Fehler eines Ein-/Ausgabesystems des Automatisierungssystems ist aufgetreten oder wieder behoben worden, eine aktive Anfrage über eine Systemfunktion des Automatisierungsgerätes wurde abgesetzt, das Automatisierungsgerät geht von einem Run-Zustand in einen Stopp-Zustand über, ein Zeitzähler ist abgelaufen und während der abgelaufenen vorgebbaren Zeit des Zeitzählers ist keine durch das Diagnoseprogramm bereits erkannte Meldung eingetroffen bzw. eingetragen also unterdrückt worden. Dabei ist das Rücksetzmittel vorzugsweise dazu ausgestaltet auf Grundlage der verfahrensmäßig beschriebenen Bezugsprüfung der Hardwarekomponente zur Meldung, die entsprechenden Überlaufmeldungen oder Überlaufmerker zurückzusetzen.

Die Zeichnung zeigt ein Ausgestaltungsbeispiel der Erfindung: Es zeigen:
- FIG 1: ein Automatisierungsgerät im Verbund eines Automatisierungssystems und
- FIG 2: einen Diagnosespeicher ausgestaltet als ein Ringspeicher.

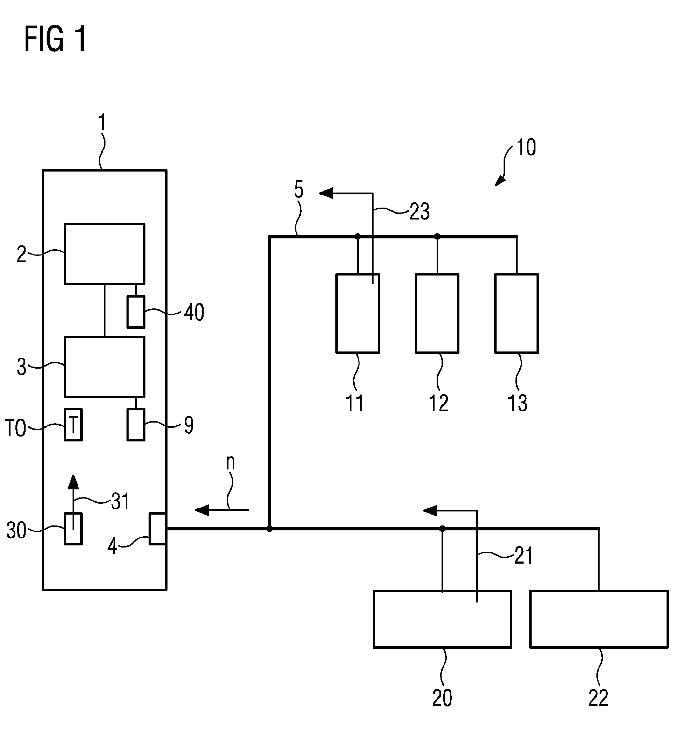

Gemäß FIG 1 ist ein Automatisierungssystem 10, umfassend ein Automatisierungsgerät 1, eine erste Hardwarekomponente 11, eine zweite Hardwarekomponente 12, eine dritte Hardwarekomponente 13, eine Station 20 und ein Ein-/Ausgabesystem 22, wobei die Station 20 und die Komponenten allesamt über einen Feldbus 5 mit dem Automatisierungsgerät 1 verbunden sind, dargestellt.

Bei dem Automatisierungsgerät 1 erfolgt die Anschaltung an den Feldbus 5 über eine Feldbusanschaltung 4. Hierüber kann das Automatisierungsgerät 1 von den Stationen, Ein-/Ausgabegeräten oder Hardwarekomponenten abgesetzte Diagnosemeldungen entgegennehmen und in einen Diagnosespeicher 2 eintragen.

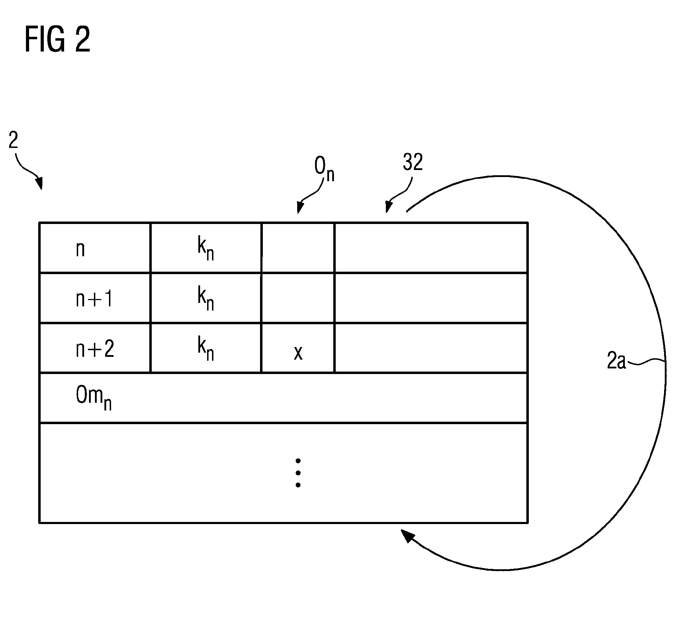

Dabei ist ein Diagnoseprogramm 3 in dem Automatisierungsgerät 1 dazu ausgestaltet eine Meldung n, beispielsweise von der dritten Hardwarekomponente 13, zu erfassen und in den Diagnosespeicher 2 einzutragen. Um einen Überlauf des Diagnosespeichers 2 zu vermeiden ist das Diagnoseprogramm 3 weiterhin dazu ausgestaltet, zu prüfen, ob diese Meldung n bereits im Diagnosespeicher 2 existiert und falls dies zutrifft, einen Zähler kₙ (siehe FIG 2) für diese Meldung n bis zu einem vorgebbaren Grenzwert g hoch zuzählen und bei erreichen des Grenzwertes g einen sich auf diese Meldung n beziehenden Überlaufmerker Oₙ zu generieren.

Sollte nun beispielsweise die erste Hardwarekomponente 11 einen Wackelkontakt aufweisen und dadurch fortwährend einen Drahtbruchfehler 23 absetzen, so würde beispielsweise in einer Zeit von 5 Minuten 100-mal die Meldung Drahtbruchfehler eingetragen werden. Da nun aber das Automatisierungsgerät 1 mit dem Diagnoseprogramm 3 dazu ausgestaltet ist die Meldung n bzw. in dem Fall die Meldung des Wackelkontaktes, die Drahtbruchfehlermeldung 23, nur bis zum Erreichen des Grenzwertes g wiederholt einzutragen und danach nur noch den Zähler kₙ für diese Meldung n hoch zuzählen und einmalig eine sich auf diese Meldung n beziehende Überlaufmeldung omₙ zu generieren und in den Diagnosespeicher 2 einzutragen, wird ein Überlauf des Diagnosespeichers 2 vermieden.

Gemäß FIG 2 ist ein prinzipieller Aufbau des aus FIG 1 bekannten Diagnosespeichers 2 dargestellt. Der Diagnosespeicher 2 arbeitet nach dem Prinzip eines Ringpuffers 2a. Eine Besonderheit des Ringpuffers ist es, dass er eine feste Größe besitzt. Dabei zeigt ein In-Pointer auf ein erstes freies Element in einem Gerät, das den Ringpuffer repräsentiert, und ein Out-Pointer auf das erste belegte Element in dem Gerät. Im Unterschied zu einem fortlaufenden Speicher werden die ältesten Inhalte überschrieben, wenn der Ringpuffer voll ist und weitere Elemente in den Ringpuffer abgelegt werden sollen.

In dem Ringpuffer 2a werden zeilenweise Meldungen und Ereignisse abgelegt, dabei kennzeichnet eine erste Spalte dass eine Meldung n eingegangen ist. Der Meldung n ist ein Zähler kₙ und ein Überlaufmerker Oₙ zugeordnet. Weiterhin kann eine Meldungszeile n ein Feld für weitere Meldungsparameter 32 aufweisen. Das Feld mit dem Meldungsparametern 32 könnte beispielsweise wie folgt aufgebaut sein, Zeit, ID, Modul, Kanal, eine Kennung, ob die Meldung gekommen ist oder gegangen ist, usw.. Im vorliegenden Beispiel ist die Meldung n in die erste Zeile des Ringpuffers 2a eingetragen. Darauf folgt nochmals die Meldung n versehen ist, kennzeichnet als n + 1. Da von den Diagnoseprogramm 3 geprüft wurde, ob diese Meldung n bereits im Diagnosespeicher 2 bzw. in dem Ringpuffer 2a existiert wurde der Zähler kₙ in der zweiten Zeile um 1 erhöht. Nach der zweiten Zeile schließt sich eine dritte Zeile an, welche wiederum mit der Meldung n gekennzeichnet als n + 2. Da wiederum geprüft wird, ob die Meldung n schon vorhanden ist, wird der Zähler kₙ wiederum um 1 erhöht. Ausgehend davon, dass der Grenzwert g mit der Zahl 3 vorbelegt ist und nun der Zähler kₙ den Grenzwert g = 3 erreicht hat, wird ein Überlaufmerker Oₙ gesetzt.

In FIG 2 ist dies dargestellt durch ein X-Zeichen in der Spalte für den Überlaufmerker Oₙ. Da die Meldung n nun dreimal eingetragen wurde und der Überlaufmerker Oₙ gesetzt wurde, wird einmalig eine sich auf die Meldung n beziehende Überlaufmeldung omₙ generiert und in den Diagnosespeicher 2 eingetragen.

Für den Fall, dass die erste Hardwarekomponente 11 aus FIG 1 einen Wackelkontakt hätte, so würden nun normalerweise weitere Meldungen N bzw. weitere Drahtbruchfehler 23 in den Diagnosespeicher 2 eingetragen werden, aber dadurch dass das Diagnoseprogramm 3 dazu ausgestaltet ist, in diesem Fall nur dreimal die Meldung n bzw. den Drahtbruchfehler 23 einzutragen und danach den Überlaufmerker Oₙ zu generieren und zusätzlich noch eine Überlaufmeldung abzusetzen und in den Diagnosespeicher 2 einzutragen, wird ein Überlauf des Diagnosespeichers 2 aufgrund einer ständig wiederkehrenden Drahtbruch-Fehlermeldung vermieden.

Als Alternative zu dem Eintrag des Zählers, des Überlaufmerkers und der Überlaufmeldung in dem Diagnosespeicher, können diese Werte auch in der entsprechenden, die Störung meldende Hardwarekomponente, oder in einer in dem Automatisierungsgerät enthaltenen Konfigurationsdatei für alle Hardwarekomponenten in dem Automatisierungssystem, abgelegt werden.

Zusammenfassend kann gesagt werden, um die Diagnose in einem Automatisierungssystem 10 zu vereinfachen wird ein Automatisierungsgerät 1 bereitgestellt, welches es ermöglicht mit einem entsprechenden Diagnoseprogramm 3 ein Fluten des Diagnosespeichers 2 aufgrund von ständig wiederkehrenden gleichen Störungen oder Meldungen zu vermeiden. Dies erlaubt einen Diagnosespeicher 2 für ein Automatisierungsgerät 1 nicht beliebig groß anlegen zu müssen. Da Automatisierungsgeräte üblicher Weise im 24-Stunden Betrieb über Jahre hinweg laufen, würde ansonsten eine sehr große Datenmenge für unnötige Störmeldungen bereitgestellt werden müssen.

## Patentansprüche

1. Verfahren zum Betrieb eines Diagnosespeichers (2) in einem Automatisierungsgerät (1), wobei über ein Diagnoseprogramm (3) eine Meldung (n) von Hard- und/oder Softwarekomponenten eines Automatisierungssystems (10) erfasst wird, und in den Diagnosespeicher (2) eingetragen wird, **dadurch gekennzeichnet, dass**
- durch das Diagnoseprogramm (3) geprüft wird, ob diese Meldung (n) bereits im Diagnosespeicher (2) existiert und
- falls dies zutrifft ein Zähler(kₙ) für diese Meldung (n) bis zu einem vorgebbaren Grenzwert (g) hoch gezählt wird, und
- bei Erreichen des Grenzwertes (g) ein sich auf diese Meldung (n) beziehender Überlaufmerker (oₙ) generiert wird, wodurch ein Überlauf des Diagnosespeichers (2) vermieden wird.

2. Verfahren nach Anspruch 1, wobei die Meldung (n) nur bis zum Erreichen des Grenzwertes (g) wiederholt eingetragen wird und danach nur noch der Zähler(kₙ) für diese Meldung (n) hoch gezählt wird und einmalig eine sich auf diese Meldung (n) beziehende Überlaufmeldung (omₙ) generiert wird, und in den Diagnosespeicher (2) eingetragen wird.

3. Verfahren nach Anspruch 1 oder 2, wobei der Überlaufmerker (oₙ) und der Zähler(kₙ) durch eines der folgenden Ereignisse zurückgesetzt wird:
- eine Hardwarekomponente (11,12,13) auf die sich die Überlaufmeldung (omₙ) und der Überlaufmerker (oₙ) beziehen wird in dem Automatisierungssystem (10) entfernt oder zu gesteckt,
- ein Stationsfehler (21) einer Station (20) des Automatisierungssystems (10) ist aufgetreten oder wieder behoben,
- ein Fehler eines Ein-/Ausgabesystems (22) des Automatisierungssystems (10) ist aufgetreten oder wieder behoben worden,
- eine aktive Anfrage (31) über eine Systemfunktion (30) des Automatisierungsgerätes (1) wurde abgesetzt,
- das Automatisierungsgerät (1) geht von einem Run-Zustand in einen Stopp-Zustand über,
- ein Zeitzähler (TO) ist abgelaufen und während der abgelaufenen vorgebbaren Zeit (T) des Zeitzählers (TO) ist keine, durch das Diagnoseprogramm (3) bereits erkannte, Meldung (n) erneut eingetroffen bzw. eingetragen worden.

4. Automatisierungsgerät (1), umfassend
- einen Diagnosespeichers (2),
- ein Diagnoseprogramm (3),
wobei das Diagnoseprogramm (3) ausgestaltet ist eine Meldung (n) von Hard- und/oder Softwarekomponenten eines Automatisierungssystems (10) zu erfassen und in den Diagnosespeicher (2) ein zutragen,
**dadurch gekennzeichnet, dass**
- das Diagnoseprogramm (3) weiterhin zum Prüfen ausgestaltet ist, ob diese Meldung (n) bereits im Diagnosespeicher (2) existiert und
- falls dies zutrifft ein Zähler(kₙ) für diese Meldung (n) vorhanden ist, welcher bis zu einem vorgebbaren Grenzwert (g) hoch zählt, und
- bei Erreichen des Grenzwertes (g) ein sich auf diese Meldung (n) beziehender Überlaufmerker (oₙ) generiert wird, wodurch ein überlauf des Diagnosespeichers (2) vermeidbar ist.

5. Automatisierungsgerät (1) nach Anspruch 4, wobei das Diagnoseprogramm (3) weiterhin dazu ausgestaltet ist die Meldung (n) nur bis zum Erreichen des Grenzwertes (g) wiederholt ein zutragen und danach nur noch den Zähler(kₙ) für diese Meldung (n) hoch zuzählen und einmalig eine sich auf diese Meldung (n) beziehende Überlaufmeldung (omₙ) zu generieren und in den Diagnosespeicher (2) ein zutragen.

6. Automatisierungsgerät (1) nach Anspruch 4 oder 5, mit einem Rücksetzmittel (40), welches ausgestaltet ist den Überlaufmerker (oₙ) und den Zähler(kₙ) zurück zu setzen, falls eines der folgenden Ereignisse eintritt:
- eine Hardwarekomponente (11,12,13) auf die sich die Überlaufmeldung (omₙ) und der Überlaufmerker (oₙ) beziehen wird in dem Automatisierungssystem (10) entfernt oder zu gesteckt,
- ein Stationsfehler (21) einer Station (20) des Automatisierungssystems (10) ist aufgetreten oder wieder behoben,
- ein Fehler eines Ein-/Ausgabesystems (22) des Automatisierungssystems (10) ist aufgetreten oder wieder behoben worden,
- eine aktive Anfrage (31) über eine Systemfunktion (30) des Automatisierungsgerätes (1) wurde abgesetzt,
- das Automatisierungsgerät (1) geht von einem Run-Zustand in einen Stopp-Zustand über,
- ein Zeitzähler (TO) ist abgelaufen und während der abgelaufenen vorgebbaren Zeit (T) des Zeitzählers (TO) ist keine durch das Diagnoseprogramm (3) bereits erkannte Meldung (n) eingetroffen bzw. eingetragen worden.
